# DEMANDE DE BREVET EUROPEEN

(11) **EP 3 200 333 A1**
(43) Date de publication de la demande: **02.08.2017**
(21) Numéro de dépôt: 17152969.6
(22) Date de dépôt: 25.01.2017
(51) Int. Cl.: H02M 1/42, H02M 3/158

(54) **CONVERTISSEUR DE COURANT ALTERNATIF EN COURANT CONTINU**

(30) Priorité: 27.01.2016 FR 1650663
(71) Demandeur: Zodiac Actuation Systems, 89000 Auxerre (FR)
(72) Inventeur: VEREILLE, Vincent, 31100 Toulouse (FR)
(74) Mandataire: Cabinet Plasseraud

(57) **Abrégé**

L'invention concerne un convertisseur (10) de courant alternatif en courant continu comprenant un redresseur de tension (20), un condensateur (16), et un correcteur de facteur de puissance maître (26) comprenant une unité de correction maître (30) et un contrôleur maître (32), le contrôleur maître étant propre à piloter des moyens de commutation maître (46) à partir d'un signal maître (62).

Le convertisseur comprend également un correcteur de facteur de puissance esclave (28) comprenant une unité de correction esclave (34) et un contrôleur esclave (36), le contrôleur esclave étant propre à piloter des moyens de commutation esclave (48) à partir d'un signal esclave (64), et un module de synchronisation (66) pour la génération du signal maître (62) et du signal esclave, le signal maître et le signal esclave (64) étant déphasés. Le correcteur de facteur de puissance maître comprend des moyens (50) de génération d'un courant de référence à partir du courant en amont du redresseur de tension (20), les moyens étant reliés en entrée du contrôleur maître (32). Les moyens de génération du courant de référence comprennent un module de compensation de phase (52) propre à réduire, en fonction de la fréquence du courant d'alimentation, le déphasage entre l'intensité et la tension du courant en amont du redresseur de tension (20) en ajoutant au courant d'alimentation du convertisseur (10) une phase de correction.

## Description

La présente invention concerne un convertisseur de courant alternatif en courant continu comprenant :
- une entrée d'alimentation alternative délivrant un courant d'alimentation alternatif,
- un redresseur de tension connecté en entrée à l'entrée d'alimentation,
- un condensateur connecté entre la masse et une sortie, et
- un correcteur de facteur de puissance maître comprenant une unité de correction de facteur de puissance maître et un contrôleur maître, l'unité de correction de facteur de puissance maître étant connectée en entrée au redresseur de tension et connectée en sortie au condensateur et comprenant des moyens de commutation maître, le contrôleur maître étant propre à piloter les moyens de commutation maître de l'unité de correction de facteur de puissance maître à partir d'un signal maître de commande.

Les convertisseurs de courant alternatif en courant continu sont couramment formés d'un pont de diodes et d'un condensateur en sortie.

La présence d'un tel convertisseur est équivalente à une charge non linéaire sur le réseau. Ceci a pour conséquence de déformer le courant circulant sur le réseau. En particulier, des déphasages entre le courant et la tension du réseau apparaissent et des perturbations électromagnétiques (EMI) sont générées.

Pour pallier cette difficulté, on connaît de l'état de la technique des correcteurs de facteur de puissance intégrés aux convertisseurs. Il s'agit, par exemple, de correcteurs de facteur de puissance actifs avec des typologies de type Buck, Boost au outre.

Un tel correcteur de facteur de puissance est adapté pour conserver un courant non déphasé avec la tension en entrée du convertisseur et pour limiter la génération de perturbations électromagnétiques.

Le correcteur de facteur de puissance comprend une unité de correction de facteur de puissance et un contrôleur qui pilote l'unité de correction de facteur de puissance. Le contrôleur analyse en temps réel l'allure du courant pour en déduire une erreur de forme par comparaison avec une image du courant de l'alimentation d'entrée voulu, c'est-à-dire purement sinusoïdal et présentant un déphasage nul avec la tension.

Toutefois, un convertisseur équipé d'un tel correcteur de facteur de puissance ne réduit pas suffisamment les perturbations électromagnétiques générées sur le réseau. Il nécessite ainsi des moyens de filtrage conséquents.

Le but de l'invention est de proposer un convertisseur de courant alternatif en courant continu nécessitant des moyens de filtrage réduits, tout en garantissant une stabilité en regard du réseau d'alimentation.

A cet effet, l'invention a pour objet un convertisseur de courant alternatif en courant continu, comprenant :
- une entrée d'alimentation alternative délivrant un courant d'alimentation alternatif,
- un redresseur de tension connecté en entrée à l'entrée d'alimentation,
- un condensateur connecté entre la masse et une sortie, et
- un correcteur de facteur de puissance maître comprenant une unité de correction de facteur de puissance maître et un contrôleur maître, l'unité de correction de facteur de puissance maître étant connectée en entrée au redresseur de tension et connectée en sortie au condensateur et comprenant des moyens de commutation maître, le contrôleur maître étant propre à piloter les moyens de commutation maître de l'unité de correction de facteur de puissance maître à partir d'un signal maître de commande,
- au moins un correcteur de facteur de puissance esclave, le ou chaque correcteur de facteur de puissance esclave comprenant une unité de correction de facteur de puissance esclave et un contrôleur esclave, l'unité de correction de facteur de puissance esclave étant connectée en entrée au redresseur de tension et connectée en sortie au condensateur et comprenant des moyens de commutation esclave, le contrôleur esclave étant propre à piloter les moyens de commutation esclave de l'unité de correction de facteur de puissance esclave à partir d'un signal esclave de commande, et
- un module de synchronisation relié au contrôleur maître et au contrôleur esclave pour la génération du signal maître de commande et du signal esclave de commande, le signal maître de commande et le signal esclave de commande étant déphasés dans lequel le correcteur de facteur de puissance maître comprend des moyens de génération d'un courant de référence à partir du courant en amont du redresseur de tension, les moyens étant reliés en entrée du contrôleur maître.

Caractérisé en ce que les moyens de génération du courant de référence comprennent un module de compensation de phase propre à réduire, en fonction de la fréquence du courant d'alimentation, le déphasage entre l'intensité et la tension du courant en amont du redresseur de tension en ajoutant au courant d'alimentation du convertisseur une phase de correction.

Suivant des modes particuliers de réalisation, le convertisseur selon l'invention comprend l'une ou plusieurs des caractéristiques suivantes, prise(s) isolément ou suivant toutes combinaisons techniquement possibles :
- le signal maître de commande et le signal esclave de commande sont déphasés de 180°;
- le module de synchronisation comprend des moyens de modulation propres à moduler en fréquence le signal maître de commande et le signal esclave de commande ;
- le convertisseur comprend des moyens de filtrage connectés en entrée à l'entrée d'alimentation et connectés en sortie au redresseur de tension ;
- le correcteur de facteur de puissance maître comprend des moyens de mesure de la tension de sortie, les moyens étant reliés en entrée du contrôleur maître, le contrôleur maître étant propre à calculer, à partir de la tension de sortie mesurée par les moyens et du courant de référence, une référence de courant de régulation et le contrôleur maître étant propre à calculer le signal maître de commande en fonction du courant de régulation ;
- le contrôleur maître est relié au contrôleur esclave pour lui fournir la référence de courant de régulation, le contrôleur esclave étant propre à calculer le signal esclave de commande en fonction du courant de régulation ;
- le correcteur de facteur de puissance maître comprend des moyens de mesure de l'intensité du courant d'alimentation de l'unité de correction de facteur de puissance maître, les moyens étant reliés en entrée du contrôleur maître, le contrôleur maître étant propre à calculer le signal maître de commande à partir de l'intensité du courant d'alimentation de l'unité de correction de facteur de puissance maître mesurée par les moyens, et
- le ou chaque correcteur de facteur de puissance esclave comprend des moyens de mesure de l'intensité du courant d'alimentation de l'unité de correction de facteur de puissance esclave, les moyens étant reliés en entrée du contrôleur esclave, le contrôleur esclave étant propre à calculer le signal esclave de commande à partir de l'intensité du courant d'alimentation de l'unité de correction de facteur de puissance esclave mesurée par les moyens.

L'invention sera mieux comprise à la lecture de la description qui va suivre, donnée uniquement à titre d'exemple, et faite en se référant aux dessins annexés, sur lesquels :
- la figure 1 est un schéma fonctionnel du convertisseur selon l'invention,
- la figure 2 est un graphique de la différence de phase entre l'intensité et la tension du courant d'alimentation du convertisseur de la figure 1,
- les figures 3 et 4 sont des courbes illustrant respectivement un signal maître de commande et un signal esclave de commande générés lors du fonctionnement du convertisseur de la figure 1,
- les figures 5 et 6 sont des courbes illustrant respectivement l'intensité sur une période du courant d'alimentation d'une unité de correction de facteur de puissance maître et du courant d'alimentation d'une unité de correction de facteur de puissance esclave entrant dans la constitution du convertisseur de la figure 1, et
- la figure 7 est une courbe illustrant l'intensité sur une période du courant à la sortie d'un redresseur de tension entrant dans la constitution du convertisseur de la figure 1.

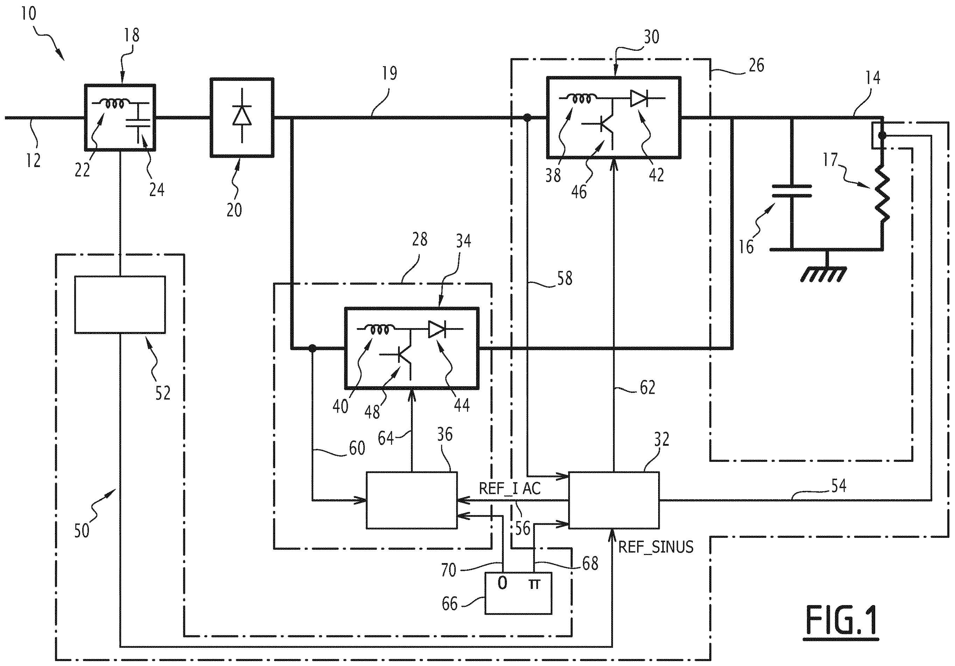

Le convertisseur 10 de courant alternatif en courant continu selon l'invention illustré sur la figure 1 comprend une entrée d'alimentation 12 alternative, une sortie 14 de courant continu et un condensateur 16 connecté à l'amont de la sortie 14. Il est propre à convertir le courant de l'entrée d'alimentation 12 pour que la tension sortie 14 soit constante.

Le convertisseur 10 est situé, par exemple, sous des sièges d'un aéronef pour alimentation de systèmes d'actionnement de siège.

L'entrée d'alimentation 12 est connectée à un système de distribution d'électricité de l'aéronef et reçoit un courant d'alimentation alternatif dont la tension varie environ entre 90V et 130V et dont la fréquence F varie entre 360Hz et 800Hz.

La tension de sortie 14 est une tension constante comprise, par exemple, entre 200V et 220V.

Comme visible sur la figure 1, la sortie 14 alimente une charge 17 qui est, par exemple, un convertisseur de courant continu en courant continu.

Le condensateur 16 a une capacité comprise environ entre 150µF et 330µF.

Le convertisseur 10 comprend, en outre, des moyens de filtrage 18 et un redresseur de tension 20.

Les moyens de filtrage 18 sont propres à réduire les perturbations électromagnétiques générées par le convertisseur 10 par filtrage d'harmoniques de courant.

Les moyens de filtrage 18 sont connectés à l'entrée d'alimentation 12 et comprennent au moins une bobine de filtrage 22 montée en série et au moins un condensateur de filtrage 24 relié à la masse.

Dans le mode de réalisation illustré par la figure 1, les moyens de filtrage 18 comprennent, par exemple, une bobine de filtrage 22 dont l'inductance varie environ entre 50µH et 100µH et un condensateur de filtrage 24 dont la capacité varie environ entre 100nF et 200nF.

Le redresseur de tension 20 est connecté en entrée aux moyens de filtrage 18 et est propre à transformer le courant alternatif délivré par les moyens de filtrage 18 en un courant dont la tension présentant la forme d'une sinusoïde redressée.

Le redresseur de tension 20 comprend typiquement quatre diodes formant un pont de diodes, également appelé pont de Graetz. Il présente une architecture classique et ne sera pas décrit plus en détail.

Le convertisseur 10 comprend, en outre, un correcteur de facteur de puissance maître 26 et au moins un correcteur de facteur de puissance esclave 28, par exemple identique au correcteur de facteur de puissance maître 26.

Dans ce qui suit, il est décrit le cas où le convertisseur 10 comprend un seul correcteur de facteur de puissance esclave 28. Lorsque le convertisseur 10 comprend n correcteurs de facteur de puissance esclaves 28, n étant un nombre entier supérieur ou égal à 2, les correcteurs de facteur de puissance esclaves 28 sont montés en parallèle, la structure du convertisseur 10 se déduisant alors du cas décrit ci-dessous.

Le correcteur de facteur de puissance maître 26 comprend une unité de correction de facteur de puissance maître 30 et un contrôleur maître 32 de facteur de puissance.

De façon analogue, le correcteur de facteur de puissance esclave 28 comprend une unité de correction de facteur de puissance esclave 34 et un contrôleur esclave 36 de facteur de puissance.

En entrée, l'unité de correction de facteur de puissance maître 30 et l'unité de correction de facteur de puissance esclave 34 sont chacune connectées au redresseur de tension 20 pour recevoir la puissance.

En sortie, l'unité de correction de facteur de puissance maître 30 et l'unité de correction de facteur de puissance esclave 34 sont chacune connectées au condensateur 16.

L'unité de correction de facteur de puissance maître 30 et l'unité de correction de facteur de puissance esclave 34 sont des unités de correction de facteur de puissance de type actif, connues de l'état de la technique. Elles présentent des typologies, par exemple, de type Buck, Boost, Buck-Boost ou autre.

Dans le mode de réalisation illustré par la figure 1, l'unité de correction de facteur de puissance maître 30 et l'unité de correction de facteur de puissance esclave 34 sont de type Boost et comprennent chacune une bobine de correction de facteur de puissance respectivement 38, 40 et une diode de correction de facteur de puissance respectivement 42, 44 montées en série.

En outre, elles comprennent respectivement des moyens de commutation maître 46 et des moyens de commutation esclave 48, chacun montés entre d'une part la masse et d'autre part entre la bobine de correction de facteur de puissance respectivement 38, 40 et la diode de correction de facteur de puissance respectivement 42, 44.

Les moyens de commutation maître 46 et les moyens de commutation esclave 48 sont des transistors, par exemple des transistors à effet de champs du type MOSFET.

Le contrôleur maître 32 et le contrôleur esclave 36 présentent des structures identiques et sont reliés respectivement à l'unité de correction de facteur de puissance maître 30 pour pilotage des moyens de commutation maître 46 et à l'unité de correction de facteur de puissance esclave 34 pour pilotage des moyens de commutation esclave 48.

L'unité de correction de facteur de puissance maître 30, l'unité de correction de facteur de puissance esclave 34, le contrôleur maître 32 et le contrôleur esclave 36 sont adaptés pour fonctionner en mode de conduction continu, connu en anglais sous l'expression « continuous conduction mode » (CCM), c'est-à-dire que les courants d'alimentation respectifs des bobines de correction de facteur de puissance respectivement 38, 40 ne sont jamais nuls pendant une période du courant d'alimentation. Ils sont de plus adaptés pour fonctionner en mode de régulation de courant moyen, connu en anglais sous l'expression « average current ».

Le contrôleur maître 32 et le contrôleur esclave 36 sont propres à analyser en temps réel l'allure des courants d'alimentation respectivement de l'unité de correction de facteur de puissance maître 30 et de l'unité de correction de facteur de puissance esclave 34 pour piloter leur fonctionnement respectif.

A cet effet, le correcteur de facteur de puissance maître 26 comprend des moyens 50 de génération d'un courant de référence REF_SINUS à partir du courant circulant en amont du redresseur de tension 20. Les moyens 50 de génération sont reliés en entrée du contrôleur maître 32.

En particulier, la génération du courant de référence REF_SINUS est mise en oeuvre à partir du courant d'alimentation des moyens de filtrage 18. Les moyens 50 de génération comprennent des moyens de détermination (non représentés) de l'intensité de crête et de la fréquence F du courant d'alimentation des moyens de filtrage 18 pour fournir au contrôleur maître 32 le courant de référence REF_SINUS qui est un courant idéal, c'est-à-dire sinusoïdal, voulu en entrée du convertisseur 10.

Avantageusement, les moyens 50 de génération comprennent un module de compensation de phase 52.

Le module de compensation de phase 52 est propre à réduire, en fonction de la fréquence F du courant d'alimentation, le déphasage entre l'intensité et la tension du courant d'alimentation du convertisseur 10.

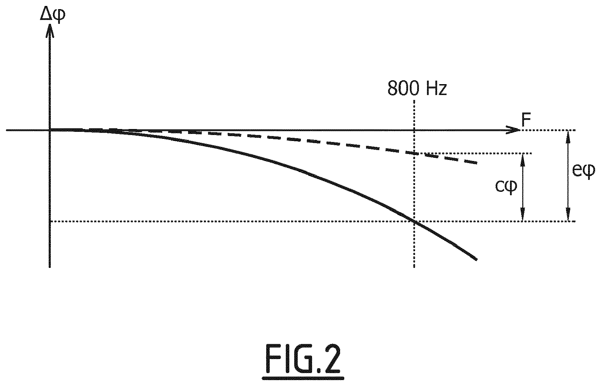

La figure 2 illustre la variation du déphasage Δϕ entre l'intensité et la tension du courant d'alimentation du convertisseur 10 en fonction de sa fréquence F.

Le déphasage Δϕ est quasiment nul dans les basses fréquences tandis qu'il augmente lorsque la fréquence F augmente. En particulier, à 800Hz, le déphasage Δϕ vaut eϕ lorsque les moyens de génération 50 ne comprennent pas de module de compensation de phase 52.

Comme visible sur la figure 2, le module de compensation de phase 52 est propre à réduire le déphasage Δϕ pour le rendre quasiment nul, en ajoutant au courant d'alimentation du convertisseur 10 une phase de correction cϕ croissante avec la fréquence F.

Le correcteur de puissance maître 26 comprend, en outre, des moyens 54 de mesure de la tension de sortie 14. Les moyens 54 sont reliés en entrée du contrôleur de maître 32.

Le contrôleur maître 32 est propre à calculer une référence de courant de régulation REF_IAC pour son fonctionnement à partir du courant de référence REF_SINUS et de la tension de sortie 14.

Le contrôleur maître 32 est en outre relié au contrôleur esclave 36 par des moyens de liaison 56 pour lui fournir la référence de courant de régulation REF_IAC pour le fonctionnement du contrôleur esclave 36.

Le correcteur de facteur de puissance maître 26 comprend également des moyens 58 de mesure de l'intensité du courant en amont de l'unité de correction de facteur de puissance maître 30. Les moyens 58 sont reliés en entrée du contrôleur maître 32.

De façon analogue, le correcteur de facteur de puissance esclave 28 comprend des moyens 60 de mesure de l'intensité du courant d'alimentation de l'unité de correction de facteur de puissance esclave 34. Les moyens 60 sont reliés en entrée du contrôleur de facteur de puissance esclave 36.

A partir de la comparaison entre la référence de courant de régulation REF_IAC et de la mesure respectivement de l'intensité du courant d'alimentation de l'unité de correction de facteur de puissance maître 30 et du courant d'alimentation de l'unité de correction de facteur de puissance esclave 34, le contrôleur maître 32 et le contrôleur esclave 36 sont chacun propres à mettre en oeuvre un pilotage respectivement de l'unité de correction de facteur de puissance maître 30 et de l'unité de correction de facteur de puissance esclave 34.

Le pilotage consiste à commuter les moyens de commutation maître 46 et les moyens de commutation esclave 48 afin d'obtenir des courants d'alimentation de l'unité de correction de facteur de puissance maître 30 et de l'unité de correction de facteur de puissance esclave 34 les plus proches possible de l'unique courant de régulation REF_IAC.

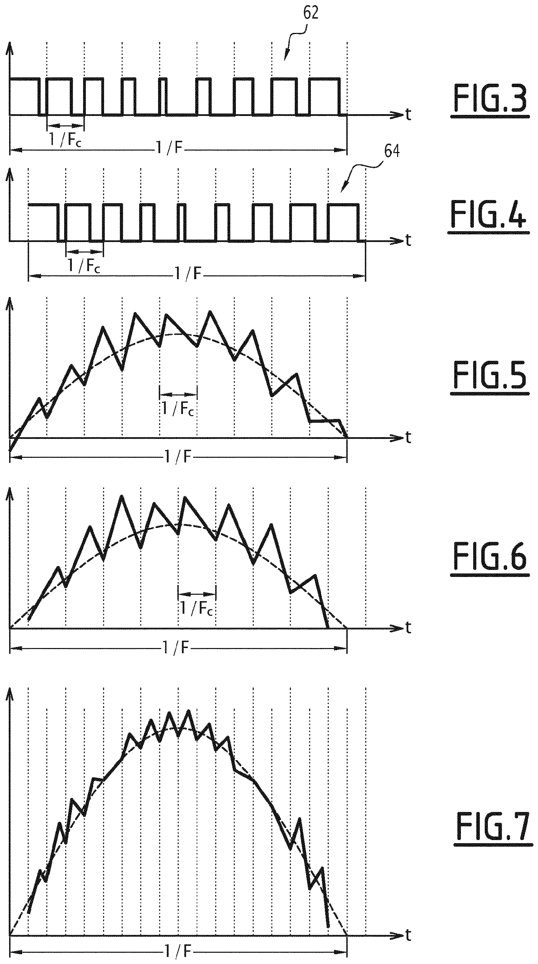

Le pilotage est mis en oeuvre à partir d'un signal maître de commande 62 et d'un signal esclave de commande 64 illustrés sur les figures 3 et 4.

A cet effet, le convertisseur 10 comprend un module de synchronisation 66 reliée au contrôleur maître 32 par des moyens de liaison de synchronisation du contrôleur maître 68 et au contrôleur esclave 36 par des moyens de liaison de synchronisation du contrôleur esclave 70.

Le module de synchronisation 66 est adapté pour piloter, par exemple au moyen d'une horloge, la génération du signal maître de commande 62 et du signal esclave de commande 64.

Comme illustré par les figures 3 et 4, le signal maître de commande 62 et le signal esclave de commande 64 présentent la forme de signaux périodiques ayant une même fréquence de commutation Fc. Il s'agit de signaux du type modulation de largeur d'impulsions, connu en anglais sous l'expression « Pulse Width Modulation » (PWM).

La fréquence de commutation Fc est, par exemple, d'environ 250 kHz.

En outre, le module de synchronisation 66 est adapté pour déphaser le signal maître de commande 62 par rapport au signal esclave de commande 64 pour que l'unité de correction de facteur de puissance maître 30 et l'unité de correction de facteur de puissance esclave 34 fonctionnent de façon entrelacée.

Dans le mode de réalisation illustré par la figure 1, le signal maître de commande 62 et le signal esclave de commande 64 sont déphasés de 180°, pour rendre l'entrelacement de l'unité de correction de facteur de puissance maître 30 et de l'unité de correction de facteur de puissance esclave 34 optimal.

Comme illustré par les figures 3 et 4, sur une période 1/Fc, le signal maître de commande 62 est d'abord, par exemple, non nul, c'est-à-dire qu'il commande l'ouverture des moyens de commutation maître 46, puis nul, c'est-à-dire qu'il commande la fermeture des moyens de commutation maître 46. En outre, le signal esclave de commande 64 est de forme identique et en retard d'une demi-période 1/2Fc par rapport au signal maître de commande 62.

Avantageusement, le module de synchronisation 66 comprend des moyens de modulation (non représenté sur la figure 1) propres à moduler en fréquence le signal maître de commande 62 et le signal esclave de commande 64.

En particulier, les moyens de modulation sont adaptés pour moduler dans une plage de fréquences de plus ou moins Δf autour de la fréquence de commutation Fc, Δf étant compris entre 10kHz et 20kHz.

La figure 5 illustre, sur une période 1/F, le courant d'alimentation de l'unité de correction de facteur de puissance maître 30 mesuré par les moyens 58.

Le courant d'alimentation de l'unité de correction de facteur de puissance maître 30 présente une forme en dents de scie, connues sous le terme « ripples » en anglais. Sur une période 1/F, les dents de scie sont portées par la sinusoïde du courant d'alimentation du convertisseur 10.

En raison du fonctionnement en mode de conduction continu (CCM), les dents de scie ne sont nulles que lorsque la tension d'alimentation du convertisseur 10 est nulle, c'est-à-dire à la fin de chaque période 1/F.

La figure 6 illustre, sur une période 1/F, le courant d'alimentation de l'unité de correction de facteur de puissance esclave 34 mesuré par les moyens 60.

Le courant d'alimentation de l'unité de correction de facteur de puissance esclave 34 présente une forme analogue à celle du courant d'alimentation de l'unité de correction de facteur de puissance maître 30 et ne sera pas décrite à nouveau.

Le fonctionnement de l'invention va à présent être décrit.

Lorsque les moyens de commutation maître 46 sont fermés sur une période 1/Fc, la diode de correction de facteur de puissance 42 se bloque et la tension aux bornes de la bobine de correction de facteur de puissance 38 fait croître linéairement un courant qui la charge en énergie magnétique. Durant cet intervalle, l'intensité du courant d'alimentation de l'unité de correction de facteur de puissance maître 30 croît et définit une phase montante.

Inversement, lorsque les moyens de commutation maître 46 sont ouverts sur une période 1/Fc, la diode de correction de facteur de puissance 42 se débloque et l'énergie magnétique emmagasinée dans la bobine de correction de facteur de puissance 38 génère un courant qui va se diriger vers le condensateur 16 pour le charger. Durant cet intervalle, l'intensité du courant d'alimentation de l'unité de correction de facteur de puissance maître 30 décroît et définit une phase descendante.

Le fonctionnement de l'unité de contrôle de facteur de puissance esclave 34 est analogue.

Comme visibles sur les figures 5 et 6, en raison du déphasage de 180° entre le signal maître de commande 62 et le signal esclave de commande 64 mis en oeuvre par le module de synchronisation 66, les dents de scie du courant d'alimentation de l'unité de correction de facteur de puissance esclave 34 présentent un retard par rapport aux dents de scie du courant d'alimentation de l'unité de correction de facteur de puissance maître 30.

Le courant à la sortie du redresseur de tension 20 est égal à la somme du courant d'alimentation de l'unité de correction de facteur de puissance maître 30 et du courant d'alimentation de l'unité de correction de facteur de puissance esclave 34. La figure 7 illustre, sur une période 1/F, le courant à la sortie du redresseur de tension 20.

Comme visible sur la figure 7, en raison du retard des dents de scie du courant d'alimentation de l'unité de correction de facteur de puissance esclave 34 par rapport aux dents de scie du courant d'alimentation de l'unité de correction de facteur de puissance maître 30, les dents de scie des courants d'alimentation des unités de correction de facteur de puissance 30, 34 se compensent partiellement voire totalement. En conséquence, le courant en sortie du redresseur de tension 20 présente des dents de scie plus nombreuses sur une période 1/F donnée et plus faibles en amplitude que les dents de scie des courants d'alimentation des unités de correction de facteur de puissance 30, 34.

Au final, l'entrelacement de l'unité de correction de facteur de puissance maître 30 et de l'unité de correction de facteur de puissance esclave 34 réduit dans le spectre fréquentiel du courant en entrée du convertisseur 10 la fréquence fondamental de commutation Fc et reporte en conséquence l'énergie principalement sur la fréquence double de la fréquence de découpage Fc.

Par ailleurs, la modulation de fréquence du signal maître de commande 62 et du signal esclave de commande 64 par les moyens de modulation répartit l'énergie spectrale autour de la fréquence de commutation Fc dans une largeur de bande de plus ou moins Δf, Δf étant compris environ entre 10kHz et 20kHz. Ceci a pour effet de réduire l'énergie portée par la fréquence de commutation Fc.

Le convertisseur 10 selon l'invention présente un certain nombre d'avantages.

L'entrelacement des unités de correction de facteur de puissance 30, 34, en éliminant quasiment dans le spectre fréquentiel du courant en entrée du convertisseur 10 la fréquence fondamentale de commutation Fc, a pour effet de réduire les perturbations électromagnétiques.

La réduction des perturbations électromagnétiques est optimisée lorsqu'un déphasage de 180° est introduit entre le signal maître de commande 62 et le signal esclave de commande 64.

Ceci a pour conséquence une réduction des moyens de filtrage 18 qui comportent ainsi moins de bobines 22 et de condensateurs 24.

De plus, la modulation de fréquence des signaux de commande 62, 64, en répartissant autour de la fréquence de commutation l'énergie spectrale, réduit encore davantage le niveau des perturbations électromagnétiques et permet, en conséquence, de réduire encore un peu plus les moyens de filtrage 18.

Le convertisseur 10 selon l'invention présente donc des moyens de filtrage 18 réduits par rapport aux convertisseurs connus dans l'état de la technique.

En outre, la présence du module de compensation de phase 52 assure un fonctionnement stable des unités de correction de facteur de puissance 30, 34 entrelacées lorsque la tension du courant d'alimentation du convertisseur 10 est basse, c'est-à-dire environ 85V. Le module de compensation de phase 52 permet en outre de garantir un faible taux de réjection de courants harmoniques pour une fréquence F du courant d'alimentation pouvant atteindre 1 kHz.

Le convertisseur 10 selon l'invention consomme moins de puissance apparente à vide par rapport aux convertisseurs connus dans l'état de la technique.

## Revendications

1. Convertisseur (10) de courant alternatif en courant continu comprenant :
- une entrée d'alimentation (12) alternative délivrant un courant d'alimentation alternatif,
- un redresseur de tension (20) connecté en entrée à l'entrée d'alimentation (12),
- un condensateur (16) connecté entre la masse et une sortie (14), et
- un correcteur de facteur de puissance maître (26) comprenant une unité de correction de facteur de puissance maître (30) et un contrôleur maître (32), l'unité de correction de facteur de puissance maître (30) étant connectée en entrée au redresseur de tension (20) et connectée en sortie au condensateur (16) et comprenant des moyens de commutation maître (46), le contrôleur maître (32) étant propre à piloter les moyens de commutation maître (46) de l'unité de correction de facteur de puissance maître (30) à partir d'un signal maître de commande (62),
- au moins un correcteur de facteur de puissance esclave (28), le ou chaque correcteur de facteur de puissance esclave (28) comprenant une unité de correction de facteur de puissance esclave (34) et un contrôleur esclave (36), l'unité de correction de facteur de puissance esclave (34) étant connectée en entrée au redresseur de tension (20) et connectée en sortie au condensateur (16) et comprenant des moyens de commutation esclave (48), le contrôleur esclave (36) étant propre à piloter les moyens de commutation esclave (48) de l'unité de correction de facteur de puissance esclave (34) à partir d'un signal esclave de commande (64), et
- un module de synchronisation (66) relié au contrôleur maître (32) et au contrôleur esclave (36) pour la génération du signal maître de commande (62) et du signal esclave de commande (64), le signal maître de commande (62) et le signal esclave de commande (64) étant déphasés.
**caractérisé en ce que** le correcteur de facteur de puissance maître (26) comprend des moyens (50) de génération d'un courant de référence (REF_SINUS) à partir du courant en amont du redresseur de tension (20), les moyens (50) étant reliés en entrée du contrôleur maître (32) et **en ce que** les moyens (50) de génération du courant de référence (REF_SINUS) comprennent un module de compensation de phase (52) propre à réduire, en fonction de la fréquence (F) du courant d'alimentation, le déphasage entre l'intensité et la tension du courant en amont du redresseur de tension (20) en ajoutant au courant d'alimentation du convertisseur (10) une phase de correction (cϕ).

2. Convertisseur (10) selon la revendication 1, dans lequel le signal maître de commande (62) et le signal esclave de commande (64) sont déphasés de 180°.

3. Convertisseur (10) selon la revendication 1 ou 2, dans lequel le module de synchronisation (66) comprend des moyens de modulation propres à moduler en fréquence le signal maître de commande (62) et le signal esclave de commande (64).

4. Convertisseur (10) selon l'une quelconque des revendications précédentes, comprenant des moyens de filtrage (18) connectés en entrée à l'entrée d'alimentation (12) et connectés en sortie au redresseur de tension (20).

5. Convertisseur (10) selon la revendication 1, dans lequel le correcteur de facteur de puissance maître (26) comprend des moyens (54) de mesure de la tension de sortie (14), les moyens (54) étant reliés en entrée du contrôleur maître (32), le contrôleur maître (32) étant propre à calculer, à partir de la tension de sortie (14) mesurée par les moyens (54) et du courant de référence (REF_SINUS), une référence de courant de régulation (REF_IAC) et le contrôleur maître (32) étant propre à calculer le signal maître de commande (62) en fonction du courant de régulation (REF_IAC).

6. Convertisseur (10) selon la revendication 5, dans lequel le contrôleur maître (32) est relié au contrôleur esclave (36) pour lui fournir la référence de courant de régulation (REF_IAC), le contrôleur esclave (36) étant propre à calculer le signal esclave de commande (64) en fonction du courant de régulation (REF_IAC).

7. Convertisseur (10) selon l'une quelconque des revendications précédentes, dans lequel le correcteur de facteur de puissance maître (26) comprend des moyens (58) de mesure de l'intensité du courant d'alimentation de l'unité de correction de facteur de puissance maître (30), les moyens (58) étant reliés en entrée du contrôleur maître (32), le contrôleur maître (32) étant propre à calculer le signal maître de commande (62) à partir de l'intensité du courant d'alimentation de l'unité de correction de facteur de puissance maître (30) mesurée par les moyens (58).

8. Convertisseur (10) selon l'une quelconque des revendications précédentes, dans lequel le ou chaque correcteur de facteur de puissance esclave (28) comprend des moyens (60) de mesure de l'intensité du courant d'alimentation de l'unité de correction de facteur de puissance esclave (34), les moyens (60) étant reliés en entrée du contrôleur esclave (36), le contrôleur esclave (36) étant propre à calculer le signal esclave de commande (64) à partir de l'intensité du courant d'alimentation de l'unité de correction de facteur de puissance esclave (34) mesurée par les moyens (60).
